# EUROPÄISCHE PATENTSCHRIFT

(11) **EP 3 586 970 B1**
(45) Veröffentlichungstag und Bekanntmachung des Hinweises auf die Patenterteilung: **05.05.2021**
(21) Anmeldenummer: 19000309.5
(22) Anmeldetag: 27.06.2019
(51) Int. Cl.: B02C 1/02, B02C 1/04

(54) **BACKENBRECHER**
JAW CRUSHER
CONCASSEUR À MÂCHOIRES

(30) Priorität: 28.06.2018 AT 1882018
(43) Veröffentlichungstag der Anmeldung: 01.01.2020
(73) Patentinhaber: Altmanninger, Claus, 4656 Kirchham (AT)
(72) Erfinder: Altmanninger, Claus, 4656 Kirchham (AT)

(56) Entgegenhaltungen:
- BE-A- 363 415
- DE-B- 1 219 774
- DE-C- 274 729
- GB-A- 968 557

## Beschreibung

Die Erfindung betrifft einen Backenbrecher jener Bauart, bei welcher eine Brechkammer durch zwei etwa plattenförmige Brechbacken eingegrenzt ist, wobei die Brechbacken in einem spitzen Winkel zueinander ausgerichtet und in einem kleinen Abstand voneinander angeordnet sind, wobei eine Brechbacke gegenüber der zweiten Brechbacke zu zyklischer Relativbewegung antreibbar ist.

Beispiele für derartige Backenbrecher zeigen die nachfolgend kurz abgehandelten Schriften DE 730093 C, US 4244532 A und EP 773066 B1.

Der Backenbrecher gemäß der DE 730093 C weist einen sogenannten Kniehebelantrieb auf. Die bewegliche, sehr steil angeordnete Brechbacke ist an ihrem oberen Rand, an welchem sie von der zweiten Brechbacke am weitesten entfernt liegt, um eine horizontale Achse schwenkbar gelagert. Nahe an ihrem unteren Rand liegt an ihrer von der von der Brechkammer abgewandten Seite ein äußeres Hebelende eines nur leicht geneigten Hebels einer Kniehebelanordnung an, deren beide Hebel als "Druckplatten" bezeichnet werden. Das äußere Ende des zweiten - im Wesentlichen horizontal ausgerichteten - Hebels der Kniehebelanordnung ist an einem gegenüber dem Maschinenrahmen stillstehenden Drehpunkt gelagert. Indem das Verbindungsgelenk zwischen den beiden Hebeln durch einen Antrieb im Wesentlichen normal zur Ausrichtung der einzelnen Hebel zyklisch bewegt wird, wird die bewegliche Brechbacke zyklisch um einen kleinen Winkelbereich geschwenkt. Die bewegliche Brechbacke ist in zwei nebeneinander liegende Teilbacken geteilt und an den beiden Teilbacken liegen die Angriffspunkte der ebenfalls geteilten Kniehebelanordnung in unterschiedlichen, fix eingestellten Höhen an. Damit kommt es während eines Bewegungszyklus' des Kniehebelantriebes zu zwei Lastspitzen, die aber jeweils nicht so hoch sind, wie wenn bei ansonsten vergleichbaren Bedingungen die bewegliche Brechbacke ungeteilt wäre. Durch Einfügen von Zwischenlagen zwischen dem zweiten Hebel der Kniehebelanordnung und dem Maschinenrahmen ist in Stufen einstellbar, um welchen Mittelwert sich der Mindestabstand zwischen den beiden Brechbacken währen der Bewegungszyklen ändert.

Beim Backenbrecher gemäß der US 4244532 A ist der obere Bereich der beweglichen Brechbacke durch eine Exzenterwelle zu kleiner kreisförmiger Bewegung um eine horizontale Achse antreibbar. Am unteren Bereich der beweglichen Brechbacke stützt eine jeweils an Brechbacke und Maschinenrahmen schwenkbar anliegende Druckplatte die bewegliche Brechbacke gegen Bewegung von der starren Brechbacke weg, ab. Die Position des Abstützpunktes der Druckplatte am Maschinenrahmen ist in Längsrichtung der Druckplatte einstellbar, womit die mittlere Weite der Auslauföffnung der Brechkammer und damit die Mindestkorngröße des verarbeiteten Brechgutes einstellbar ist.

Auch die EP 773066 B1 zeigt einen Backenbrecher, bei welchem die beweglichen Brechbacke an ihrem oberen Randbereich durch eine Exzenterwelle zu kleiner kreisförmiger Bewegung um eine horizontale Achse antreibbar ist und mit ihrem unteren Bereich durch eine an zwei gegenüberliegenden Rändern schwenkbar abgestützte Druckplatte gegenüber dem Maschinenrahmen abgestützt ist. Die Abstützung der Druckplatte zum Maschinenrahmen hin bietet zwei wahlweise verwendbare Auflagerbereiche für die Druckplatte, womit der mittlere Winkel zwischen der Druckplatte und der Ebene der Arbeitsfläche der beweglichen Brechbacke zwischen einem spitzeren und einem stumpferen Wert einstellbar ist. Die unterschiedlichen Winkel führen unter anderem zu unterschiedlichen Größenverteilungen des verarbeiteten Brechgutes.

GB 968557 und DE1219774 offenbaren Backenbrecher gemäß dem Oberbegriff des Anspruchs 1. Von diesem Stand der Technik ausgehend hat sich der Erfinder die Aufgabe gestellt, einen Backenbrecher gemäß den besprochenen Bauweisen so verbessert auszubilden, dass der Winkel zwischen der Druckplatte und der Arbeitsfläche der beweglichen Brechbacke besser einstellbar ist.

Für das Lösen wird ein Backenbrecher gemäß Anspruch 1 vorgeschlagen.

Die Erfindung wird an Hand einer Zeichnung veranschaulicht und näher erläutert.

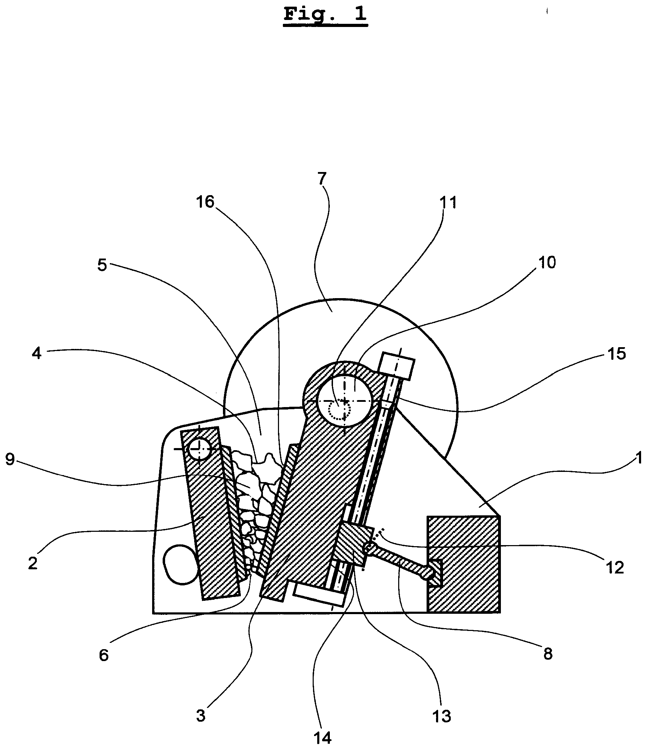

Fig. 1: zeigt in seitlicher Teilschnittansicht stark stilisiert die für das Verständnis der Erfindung wesentlichen Teile eines beispielhaften erfindungsgemäßen Backenbrechers.

Wesentliche Teile bzw. Bereiche des beispielhaften erfindungsgemäßen Backenbrechers von Fig. 1 sind ein Maschinenrahmen 1, eine daran einstellbar fixierte starre Brechbacke 2, eine bewegliche Brechbacke 3, die zwischen den Brechbacken 2, 3 eingeschlossene Brechkammer 4 mit der oben liegenden weiten Einfüllöffnung 5 und der unten liegenden schmalen Auslassöffnung 6, ein Antrieb 7 für die Bewegung der beweglichen Brechbacke 3 gegenüber dem Maschinenrahmen 1 sowie eine Druckplatte 8 für die bewegliche Abstützung der beweglichen Brechplatte 3 am Maschinenrahmen 1. ("Druckplatte" heißt der besagte, in Fig. 1 stabförmig erscheinende Teil deswegen, weil er in Wirklichkeit annähernd die Form einer Platte hat. In Fig. 1 ist von der Druckplatte 8 nur eine zur Plattenebene normal liegende Schnittebene sichtbar.)

In der Brechkammer 4 befindet sich das Brechgut 9, typischerweise Steine, dessen Korngröße durch die Bewegung der beweglichen Brechbacke 3 verringert wird und welches schließlich durch die Auslassöffnung 6 aus der Brechkammer 4 hinausfließt.

Der Antrieb 7, beispielsweise ein starker Elektromotor oder eine angetriebene Riemenscheibe, treibt den Achsbolzen 10, welcher in einer Bohrung im oberen Bereich der beweglichen Brechbacke 3 drehbar gelagert ist und typischerweise Teil einer Kurbelwelle ist, derart zu Kreisbewegung an, dass sich seine immer horizontal, parallel zur Blickrichtung in Fig. 1 ausgerichtete Achse zyklisch entlang der punktiert dargestellten Kreislinie 11 herum bewegt. Bei dieser Kreisbewegung nimmt der Achsbolzen 10 den oberen Teil der beweglichen Brechbacke 3 mit.

Der untere Teil der beweglichen Brechbacke 3 ist durch eine nicht dargestellte Zugvorrichtung mit seiner von der Brechkammer 4 abgewandten Seite gegen einen Randabschnitt der Druckplatte 8 angedrückt, welche mit einem der beweglichen Brechbacke 3 gegenüber liegenden Randabschnitt am Maschinenrahmen 1 abgestützt ist. Sowohl an der beweglichen Brechbacke 3 als auch am Maschinenrahmen 1 ist die Druckplatte um die Längsachse des jeweils anliegenden Randabschnittes schwenkbar gehalten. Bei der durch den Achsbolzen 10 erzwungenen Bewegungen des oberen Bereichs der beweglichen Brechbacke 3 vollführt der am Berührungsbereich mit der Druckplatte 8 anliegende Bereich der Brechbacke 3 zyklisch vor- und Rückwärtsbewegungen entlang eines kurzen Teils des in Fig. 1 punktiert angedeuteten Kreisbogenstückes 12. Die Achse des Kreisbogenstückes 12 ist gleich der Schwenkachse der Druckplatte 8 am Maschinenrahmen und der Radius des Kreisbogenstückes 12 ist gleich dem Abstand zwischen den beiden Schwenkachsen der Druckplatte 8 an der beweglichen Brechbacke 3 und am Maschinenrahmen 1.

Der Auflagebereich der Druckplatte 8 ist an der beweglichen Brechbacke 3 wählbar verstellbar und in unterschiedlichen ausgewählten Positionen fixierbar.

In dem an Hand von Fig. 1 gezeigten vorteilhaften Beispiel ist diese Verstellbarkeit und Fixierbarkeit mit Hilfe eines Schlittens 13 verwirklicht, welcher mit der beweglichen Brechbacke 3 verbunden ist und an welchem die Druckplatte 8 brechbackenseitig anliegt, wobei die Verbindung zwischen Schlitten 13 und beweglicher Brechbacke 3 lösbar und in verschiedenen Positionen fixierbar ist.

In der in Fig. 1 gezeigten besonders vorteilhaften Ausführung ist der Schlitten 13 an der beweglichen Brechbacke 3 entlang einer Führungsbahn 14, die typischerweise als Führungsnut ausgebildet ist, stufenlos verschiebbar, wobei die Verschiebebewegung durch Drehbewegung einer Gewindespindel 15 antreibbar ist und die jeweilige Position des Schlittens 13 an der beweglichen Brechbacke 3 durch Stillstand der Gewindespindel 15 fixierbar ist. Dazu ist die Gewindespindel 15 an der beweglichen Brechbacke 3 um ihre Längsachse drehbar geführt gehalten und sie verläuft durch eine am Schlitten 13 ausgebildete Spindelmutter.

Bevorzugt verlaufen die Führungsbahn 14 und die Gewindespindel 15 in einer zur Bewegungsebene der beweglichen Brechbacke 3 parallelen Ebene.

Erfindungsgemäß ist die Führungsbahn 14 nur maximal um 15° gegenüber der Arbeitsfläche 16 der beweglichen Brechbacke 3 geneigt. (Die Arbeitsfläche 16 ist jene Oberfläche der beweglichen Brechbacke 3, welche in der Brechkammer 4 unmittelbar an dem dort befindlichen Brechgut 9 anliegt.) Damit ist eine einfache Bauweise realisierbar, bei welcher das Verhältnis von Normalbewegung zu Tangentialbewegung der Arbeitsfläche 16 in der Nähe der Auslassöffnung 6 der Brechkammer gut verstellbar ist.

Weiter bevorzugt verläuft die Führungsbahn 14 zumindest annähernd entlang eines Kreisbogenstücks dessen Achse die Schwenkachse der Druckplatte 8 gegenüber dem Maschinenrahmen 1 ist (In Fig. 1 nicht so dargestellt.). Damit ist erreichbar, dass auf den Schlitten 13 von der beweglichen Brechbacke 3 aus kaum Kräfte wirken, die ihn entlang der Führungsbahn 14 "zu verschieben trachten". Die ggf. verwendete Gewindespindel 15 kann damit während des Betriebes des Backenbrechers weitgehend belastungsfrei sein.

Der erfindungsgemäße Gedanke ist auch dann anwendbar, wenn die an der beweglichen Brechbacke (3) anliegende Druckplatte (8) nicht - wie in Fig. 1 gezeichnet - unmittelbar am Maschinenrahmen (1) bzw. einem daran starr befestigten Teil anliegt, sondern an einem weiteren, gegenüber dem Maschinenrahmen beweglichen Teil, welcher allerdings selbst am Maschinenrahmen abgestützt ist. Das ist typischerweise dann der Fall, wenn die an der beweglichen Brechbacke anliegende Druckplatte Teil einer im Übrigen aus dem Stand der Technik bekannten Kniehebelanordnung ist, über welche die Bewegung der beweglichen Brechbacke gegenüber dem Maschinenrahmen antreibbar ist - wie eingangs an Hand der DE 730093 C besprochen.

## Patentansprüche

1. Backenbrecher, welcher einen Maschinenrahmen (1) und eine Brechkammer (4) aufweist, welche durch mehrere Brechbacken (2, 3) eingegrenzt ist, von denen zumindest eine bewegliche Brechbacke (3) gegenüber dem Maschinenrahmen (1) angetrieben geführt bewegbar ist, wobei eine Druckplatte (8) mit einem ersten Randbereich an der von der Brechkammer (4) abgewandten Seite an der beweglichen Brechbacke (3) unter Druck anliegt und mit einem dem ersten Randbereich gegenüberliegenden zweiten Randbereich druckübertragend zumindest mittelbar am Maschinenrahmen (1) anliegt, wobei die Druckplatte (8) um die jeweils anliegenden Randbereiche sowohl gegenüber dem Maschinenrahmen (1) als auch um die bewegliche Brechbacke (3) schwenkbar ist, wobei der Auflagebereich der Druckplatte (8) an der beweglichen Brechbacke (3) wählbar verstellbar und in unterschiedlichen ausgewählten Positionen fixierbar ist, wobei der Berührungsbereich der Druckplatte (8) mit der beweglichen Brechbacke (3) brechbackenseitig durch einen Schlitten (13) gebildet ist, welcher an der beweglichen Brechbacke (3) befestigt ist, und der Schlitten (13) an der beweglichen Brechbacke (3) entlang einer Führungsbahn (14) geführt verschiebbar ist, wobei die Führungsbahn (14) in einer zur Bewegungsebene der beweglichen Brechbacke (3) parallelen Ebene verläuft,
**dadurch gekennzeichnet, dass**
die Führungsbahn (14) nur maximal 15° gegenüber einer Arbeitsfläche (16) geneigt ist, mit welcher die bewegliche Brechbacke (3) in der Brechkammer (4) an dort befindlichem Brechgut (9) anliegt.

2. Backenbrecher nach Anspruch 1, **dadurch gekennzeichnet, dass** an der Brechbacke (3) eine Gewindespindel (15) um ihre Achse drehbar gelagert gehalten ist, und dass die Gewindespindel (15) mit einer am Schlitten (13) befindlichen Spindelmutter in Eingriff ist.

3. Backenbrecher nach Anspruch 1 oder 2, **dadurch gekennzeichnet, dass** die Druckplatte (8) bezüglich der Brechkammer (4) näher an deren Auslassöffnung (6) als an deren Einfüllöffnung (5) an der beweglichen Brechbacke (3) anliegt.

4. Backenbrecher nach Anspruch 3, **dadurch gekennzeichnet, dass** die bewegliche Brechbacke (3) über einen Achsbolzen (10), welcher sich normal zu ihrer Bewegungsebene durch sie hindurch erstreckt und näher an der Einfüllöffnung (5) als an der Auslassöffnung (6) der Brechkammer (4) angeordnet ist, mittelbar gegenüber dem Maschinenrahmen (1) abgestützt ist.

5. Backenbrecher nach Anspruch 4, **dadurch gekennzeichnet, dass** der Achsbolzen (10) zu zyklischer linearer Bewegung seiner Achse entlang einer Kreislinie (11) antreibbar ist.

## Claims

1. The jaw crusher, which has a machine frame (1) and a crushing chamber (4), which is restricted by multiple crusher jaws (2, 3), of which at least one movable crusher jaw (3) opposite the machine frame (1) can be moved in a guided track (14), whereby a pressure plate (8) with a first peripheral zone on the side facing away from the crushing chamber (4) on the movable crusher jaw (3) rests under pressure and with a second peripheral zone opposite the first peripheral zone resting at least indirectly on the machine frame (1) applying pressure, whereby the pressure plate (8) can be pivoted around the respective adjacent peripheral zones as well as with respect to the machine frame (1) and the movable crusher jaw (3), whereby the support area of the pressure plate (8) can be freely adjusted on the moving crusher jaw (3) and fixed in different selected positions, whereby the contact area of the pressure plate (8) with the movable crusher jaw (3) on the side of the crusher jaw is formed by an carriage (13), which is attached to the movable crusher jaw (3), and the carriage (13) on the movable crusher jaw (3) can be guided and moved along a track (14), whereby the track (14) runs in a plane parallel to the plane of movement of the movable crusher jaw (3),
**characterised in that**
the track (14) is inclined to a maximum of 15° with respect to a working surface (16), with which the movable crusher jaw (3) in the crushing chamber (4) rests against the crushed material (9) located there.

2. The jaw crusher as claimed in claim 1, **characterised in that** a threaded spindle (15) is mounted on the crusher jaw (3) so that it can rotate about its axis and that the threaded spindle (15) is engaged with a spindle nut located on the carriage (13).

3. The jaw crusher as claimed in claim 1 or 2, **characterised in that** the pressure plate (8) with respect to the crushing chamber (4) rests closer to its outlet (6) than to its filler opening (5) on the movable crusher jaw (3).

4. The jaw crusher as claimed in claim 3, **characterised in that** the movable crusher jaw (3) has an axle bolt (10) which normally extends through its plane of movement and is arranged closer to the filler opening (5) than to the outlet (6) of crushing chamber (4), is supported indirectly opposite the machine frame (1).

5. The jaw crusher as claimed in claim 4, **characterised in that** the axle bolt (10) can be driven to cyclic linear movement of its axis along a circular line (11).

## Revendications

1. Concasseur à mâchoires doté d'un bâti (1) et d'une chambre de broyage (4) délimitée par plusieurs mâchoires de broyage (2, 3), dont au moins une mâchoire de broyage mobile (3) est guidée par entraînement de façon à se déplacer par rapport au bâti (1), une plaque de pression (8) reposant sous pression contre la mâchoire de broyage mobile (3) avec une première zone de bordure sur le côté opposé à la chambre de broyage (4) et avec une deuxième zone de bordure qui transmet la pression située à l'opposé de la première zone de bordure reposant au moins indirectement contre le bâti (1), la plaque de pression (8) pouvant être pivotée autour des zones de bordure respectivement adjacentes tant par rapport au bâti (1) qu'autour de la mâchoire de broyage mobile (3), la zone d'appui de la plaque de pression (8) contre la mâchoire de broyage mobile (3) pouvant être réglée par sélection et fixée dans différentes positions sélectionnées, la zone de contact de la plaque de pression (8) avec la mâchoire de broyage mobile (3) étant formée du côté des mâchoires de broyage par un chariot (13) fixé à la mâchoire de broyage mobile (3) et le chariot (13) contre la mâchoire de broyage mobile (3) pouvant être guidé de façon à se déplacer le long d'une voie de guidage (14), la voie de guidage (14) étant située à un niveau parallèle au plan de mouvement de la mâchoire de broyage mobile (3),
**caractérisé en ce que**
la voie de guidage (14) n'est inclinée qu'à 15° au maximum par rapport à une surface de travail (16) avec laquelle la mâchoire de broyage mobile (3) repose dans la chambre de broyage (4) contre le matériau concassé (9) qui s'y trouve.

2. Concasseur à mâchoires selon la revendication 1, **caractérisé en ce qu'**une broche filetée (15) est maintenue contre la mâchoire de broyage (3) par montage en rotation autour de son axe et que la broche filetée (15) est en prise avec un écrou de broche situé sur le chariot (13).

3. Concasseur à mâchoire selon les revendications 1 ou 2, **caractérisé en ce que** la plaque de pression (8) en qui concerne la chambre de broyage (4) repose plus près de son orifice de sortie (6) que de son orifice de remplissage (5) contre la mâchoire de broyage mobile (3).

4. Concasseur à mâchoire selon la revendication 3, **caractérisé en ce que** la mâchoire de broyage mobile (3) est soutenue indirectement par rapport au bâti (1) à l'aide d'un axe-pivot (10) qui se déploie au travers de manière normale par rapport à son plan de mouvement et qui est placé plus près de l'orifice de remplissage (5) que de l'orifice de sortie (6) de la chambre de broyage (4).

5. Concasseur à mâchoire selon la revendication 4, **caractérisé en ce que** l'axe-pivot (10) peut être actionné en un mouvement cyclique linéaire de son axe le long d'une ligne circulaire (11) .
